# EUROPEAN PATENT SPECIFICATION

(11) **EP 1 681 196 B1**
(45) Date of publication and mention of the grant of the patent: **11.08.2010**
(21) Application number: 05110861.1
(22) Date of filing: 17.11.2005
(51) Int. Cl.: B60K 28/16, B60W 10/02, B60W 10/10

(54) **Method for reducing slippage of the driving wheels, and apparatus**
Verfahren zur Verminderung des Schlupfes der Antriebsräder und Vorrichtung
Procédé pour réduire le patinage des roues d'entraînement, et appareil

(30) Priority: 23.12.2004 IT MI20042470
(43) Date of publication of application: 19.07.2006
(73) Proprietor: IVECO S.p.A., 10156 Torino (IT)
(72) Inventor: Orlando, Daniele, 10129 Torino (IT)
(74) Representative: Borsano, Corrado

(56) References cited:
- DE-A1- 10 236 292
- DE-A1- 19 939 442

## Description

### SCOPE OF THE INVENTION

This invention relates to a method for operating an automated gearbox in a motor vehicle, capable of operating in two alternative modes, in order to reduce slippage of the driving wheels.

### PRIOR ART

In the field of vehicle technology considerable progress has been made in the use of electronic driving aids, and in particular in the use of systems to control critical and potentially hazardous situations. For example use is frequently made of antilock braking systems such as ABS, that comprise specific sensors that detect when one or more wheels lock up during braking, and activate the brakes in order to eliminate said condition and restore traction, while ensuring the maximum possible braking power.

However, loss of adherence, particularly of the driving wheels, frequently occurs also not while braking, for example in case of sudden acceleration, in slippery road conditions, on bends, especially tight bends or when travelling at relatively high speeds. In fact, under said conditions less torque the torque that can be transmitted through the wheels decreases, and slippage occurs if the driver requests, through the accelerator pedal, more than the maximum amount of torque that can be transmitted.

Systems such as the ASR system (anti-slip regulation system) are capable of detecting a wheel slippage condition (for example by measuring the speed of the driving wheels in relation to that of the other wheels) and restoring the traction of the driving wheels by controlling the brakes and engine power output.

Vehicles, and in particular industrial vehicles, are often equipped with an automated stage-geared gearbox, in which a series of actuating elements, including elements to open and close the clutch, and elements for shifting gear, are controlled by an electronic control system that is capable of shifting gear as required on the basis of conditions that are monitored by measuring a number of engine operating parameters; this type of gearbox has a simpler construction and is more efficient than conventional automatic gearboxes. Automated gearboxes of the type described above are usually used in conjunction with electronic systems that control the torque output of the engine, for example by controlling the amount of fuel that is injected (as normally occurs in diesel engines) or in another appropriate manner.

In the absence of an ASR-type system, automated stage-geared gearboxes present this additional problem: in case of slippage of the driving wheels, the system may recognize an increase in speed and a reduction in the torque applied to the road as a condition for upshifting, in a situation in which this operation is not appropriate.

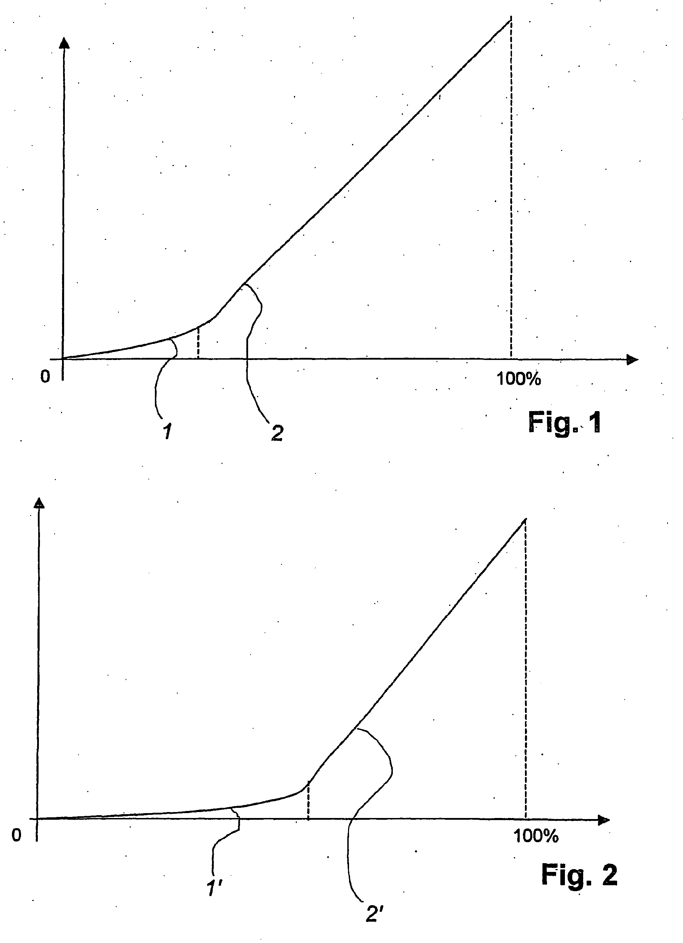

The automated gearbox bases the torque request, which it uses to control the engine, on a map such as that of figure 1; said map regards the torque transmitted by the clutch, irrespective of the gear that is engaged.

Accordingly, there is a need to use the functions available on a vehicle equipped with an automated gearbox in order to avoid the drawback described above and drastically reduce slippage of the driving wheels, even in the absence of a specific device such as the ASR system.

The closest prior art according to the preamble of claim 1 (method) and claim 5 (program) is shown by the document DE 19939442.

### SUMMARY OF THE INVENTION

The problems described above have now been solved with a method for operating an electronic automated stage-geared gearbox system for a motor vehicle, according to attached claim 1 (method) and claim 5 (program).

As "switching to a status" is also intended the maintenance of said status if the conditions that are detected remain unchanged.

This invention relates in particular to what set forth in the attached claims.

### LIST OF DRAWINGS

This invention will now be illustrated through a detailed description of the preferred but not exclusive embodiments, furnished merely by way of example, with the aid of the figures attached hereto, of which:
figure 1 schematically represents a first function of the torque transmitted by the clutch in relation to the position of the accelerator pedal (0 corresponds to the foot raised, 100 to the pedal fully depressed);
figure 2 schematically represents a second function of the torque transmitted by the clutch in relation to the position of the accelerator pedal;
figure 3 schematically represents a flowchart of the sequence of operations performed by said control system to switch from one status to the other.

### DETAILED DESCRIPTION OF AN EMBODIMENT

Figure 1 schematically represents a function used by the gearbox control system to manage the requested torque and the clutch position in a coordinated manner. The term gearbox control system is intended here to mean all the electronic and software means capable of processing a series of input data regarding the operating conditions of the engine and requests sent by the driver by means of specific control devices, and of controlling a series of actuators that enable gear shifting, clutch control and control of the engine, in particular of the torque output thereof, for example by controlling the amount of supplied fuel. The y-axis shows the torque that is transmitted by the clutch and the x-axis shows the position of the accelerator pedal as a percentage of travel (0 corresponds to the foot raised, 100 to the pedal fully depressed); according to one possible arrangement, the system comprises an engine control unit, a gearbox control unit and a unit that receives information from the sensors associated with the wheels. Said units may be separate and communicate with one another for example via a common data exchange line of the vehicle, or may be integrated into a single apparatus, according to specific requirements.

Figure 1 illustrates a function that can be used for operation in the "normal" status.

In figure 1 it can be observed that the torque function is monotonic increasing as the pedal position value increases and essentially presenting two separate areas, the first of which has a slope considerably lower than that of the second, which may present a substantially linear pattern. In the first area, called maneuver area 1, which may preferably comprise pedal position values from 0 to values of not more than 25% - 30% the torque does not increase by more than 15%, and preferably does not increase by more than 10% in relation to the maximum torque (corresponding to the pedal fully depressed). Merely by way of example, the maximum torque may be around 240 Nm for 96 CV engines and 270 Nm for 116 CV engines; anyway, said values depend on the type of engine and vehicle application. In operating area 2 , relative to higher accelerator pedal position values, the torque increases from the maximum value of the maneuver area to the maximum torque value relative to the pedal fully depressed.

Figure 2 illustrates a function that may be used for operation in the "wheel slip" status.

It can be observed that the maneuver area 1' with the same meaning as that in figure 1 may comprise a wider range of values, up to 50% and optionally up to 60% of the accelerator pedal travel, while outside the maneuver area the torque increases until reaching a maximum value, with the pedal fully depressed; the maximum torque value used in the "wheel slip" status may be the same as that used in the "normal" status. It can be observed that switching from the "normal" status to the "wheel slip" status automatically implies a request to limit the torque that is transmitted, which makes it possible to move away from the slippage conditions and restore the traction of the driving wheels.

The slippage condition may be detected by means of specific sensors, capable of detecting, in a known way, the difference in speed between the driving wheels and the other wheels; for example the slippage condition may be established when there is a difference in speed of at least 7 Km/h between a driving wheel and another wheel on the same side of the vehicle, but other criteria may also be established.

According to a particular embodiment of the invention the sensors may be part of an ABS system, and the speed data, or a direct signal corresponding to the condition (normal or slip) that has been detected, may be transmitted by the ABS electronic control device to the gearbox electronic control system.

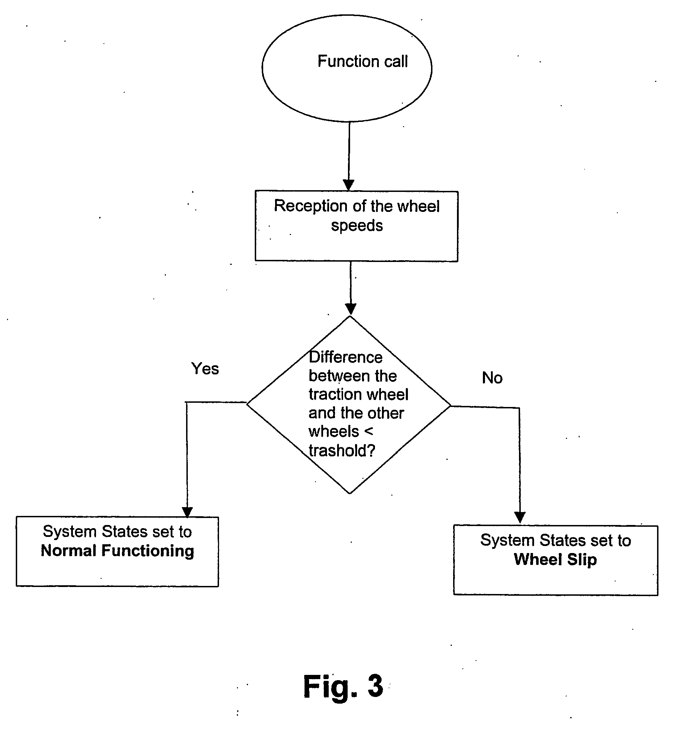

Figure 3 illustrates a possible routine with which the gearbox control system controls the slippage condition and switches between one state and the other of the two mentioned above. Sampling may be effected continuously, or more frequently at discrete intervals, ("function call" box); the next step consists of acquiring information about the speeds of the wheels, or the portion thereof considered relevant; the next operation consists of determining the occurrence of the slippage condition (in the case in the example this occurs when a maximum value, that may be programmable, relating to the difference between the speed of the driving wheels and non-driving wheels, is exceeded), and of activating the "normal" status if the condition has not occurred and the "wheel slip" status if it has occurred.

The curves in figures 1 and 2 refer to the torque transmitted by the clutch, that may be obtained by controlling the torque output of the engine and adjusting the clutch control curve. As a consequence, having extended the maneuver area 1 when the onset of a slippage condition of the driving wheels is detected, inappropriate upshifting is prevented and the torque is transmitted in a more linear manner as a function of the actual slippage.

The invention also relates to an apparatus, comprising an electronic automated gearbox system for a motor vehicle, of a type that is known in the prior art, means for controlling the torque transmitted by the clutch, for example, by controlling the torque output of the engine and/or controlling the clutch position, used to implement the method according to this invention. The apparatus also comprises means for determining the occurrence of the wheel slippage condition and for switching from one status to the other as described above. The means may comprise devices, as well as programs that can be run on a computer, such as the systems and control devices described above.

The invention also relates to a computer program capable of carrying out the method according to this invention, when run on an electronic automated gearbox control system of a motor vehicle as described above. The program preferably comprises a routine capable of carrying out the sequence of operations described in figure 3.

The novel part of the program described above may be added as an integration or modification to an existing program used to carry out the control functions known in the prior art, for example those integrated into a known gearbox control system. It may also comprise routines for controlling the torque transmitted by the clutch on the basis of the curves in figures 1 and 2.

From the description set forth above it will be possible for the person skilled in the art to embody said software using the ordinary programming techniques known in the prior art.

## Claims

1. Method for operating an electronic automated stage-geared gearbox system for a motor vehicle, comprising the following steps:
detection of a slippage condition of the driving wheels;
the switching by said system to a "normal" status if no slippage is detected or the switching to a "wheel slip" status if slippage is detected;
control, by said system of the torque transmitted by the clutch according to a first function of the accelerator pedal position in the "normal" status and according to a second function, different from the first, in the "wheel slip" status,
**characterized in that** said first and second function present a maneuver area wherein the torque does not exceed 15%, and preferably does not exceed 10% of the maximum torque, said area regarding values from 0 and up to 50% of the accelerator pedal travel for said second function and up to lower values for said first function. -

2. Method according to claim 1, wherein said second function assumes, for the same values of the pedal position, values that are at least in part lower than those of said first function.

3. Method according to claim 1 or 2, wherein said maneuver area regards values from 0 and up to 60% of the accelerator pedal travel for said second function and up to lower values for said first function.

4. Method according to any preceding claim, wherein said maneuver area comprises values from 0 and not more than 30%, optionally not more than 25% _of the accelerator pedal travel for said first function.

5. Program apt, when run on a computer, to implement the method of claim 1 or 2.

6. Program according to claim 5, wherein said maneuver area comprises values from 0 and up to 60% of the accelerator pedal travel for said second function and up to lower values for said first function.

7. Program according to any of claims 5 or 6 wherein said maneuver area comprises values from 0 and not more than 30%, optionally not more than 25% of the accelerator pedal travel for said first function.

## Patentansprüche

1. Verfahren zum Betreiben eines elektrisch automatisierten, Stufengetriebesystems für eine Fahrzeug; umfassend die folgenden Schritte:
Erkennen eines Schlupfzustandes der Antriebsräder;
Umschalten durch das System in einen "normal" Status, wenn kein Schlupf erkannt ist, oder Umschalten in einen "Radschlupf" - Status, wenn ein Schlupf erkannt ist;
mittels des Systems, Steuern des Drehmomentes, das durch die Kupplung übertragen wird, gemäß einer ersten Funktion der Gaspedal-Position in dem "normalen" Status und gemäß einer zweiten Funktion, die sich von der ersten unterscheidet, in dem "Radschlupf" - Status,
**dadurch gekennzeichnet, dass** die erste und zweite Funktion einen Manöverbereich bietet, worin das Drehmoment 15% nicht überschreitet, und vorzugsweise 10% des maximalen Drehmomentes nicht überschreitet, wobei der Bereich die Werte von 0 und bis zu 50% des Gaspedal-Weges für die zweite Funktion und bis zu niedrigeren Werten für die erste Funktion berücksichtigt.

2. Verfahren nach Anspruch 1, wobei die zweite Funktion, für die gleichen Werte der Pedalposition, Werte annimmt, welche wenigstens teilweise niedriger sind als jene der ersten Funktion.

3. Verfahren nach Anspruch 1 oder 2, wobei der Manöverbereich Werte von 0 und bis zu 60% des Gaspedal-Weges für die zweite Funktion und bis zu niedrigeren Werten der ersten Funktion berücksichtigt.

4. Verfahren nach einem der vorhergehenden Ansprüche, wobei der Manöverbereich Werte von 0 und nicht mehr als 30%, optional nicht mehr als 25% des Gaspedal-Weges der ersten Funktion umfasst.

5. Programm, das, wenn es auf einem Computer ausgeführt wird, geeignet ist, um das Verfahren von Anspruch 1 oder 2 zu implementieren.

6. Programm nach Anspruch 5, wobei der Manöverbereich Werte von 0 und bis zu 60% des Gaspedal-Weges für die zweite Funktion und bis zu niedrigeren Werten der ersten Funktion umfasst.

7. Programm nach einem der Ansprüche 5 oder 6, wobei der Manöverbereich Werte von 0 und nicht mehr als 30%, optional nicht mehr als 25% des Gaspedal-Weges der ersten Funktion umfasst.

## Revendications

1. Procédé pour actionner un système de boîte de vitesses étagée automatique électronique pour un véhicule à moteur, comprenant les étapes suivantes :
détection d'une condition de patinage des roues motrices ;
la commutation par ledit système à un état « normal » si aucun patinage n'est détecté ou la commutation à un état « de patinage de roue » si le patinage est détecté ;
le contrôle, par ledit système, du couple transmis par l'embrayage selon une première fonction de la position de la pédale d'accélérateur à l'état « normal » et selon une seconde fonction, différente de la première, à l'état « de patinage de roue »,
**caractérisé en ce que** lesdites première et seconde fonctions présentent une zone de manoeuvré, dans lequel le couple ne dépasse pas 15 % et de préférence ne dépasse pas 10 % du couple maximum, ladite zone concernant des valeurs de 0 et jusqu'à 50 % du déplacement de la pédale d'accélérateur pour ladite seconde fonction et jusqu'à des valeurs plus faibles pour ladite première fonction.

2. Procédé selon la revendication 1, dans lequel ladite seconde fonction prend, pour les mêmes valeurs de la position de pédale, des valeurs qui sont au moins en partie inférieures à celles de ladite première fonction.

3. Procédé selon la revendication 1 ou 2, dans lequel ladite zone de manoeuvre concerne des valeurs allant de 0 et jusqu'à 60 % du déplacement de la pédale d'accélérateur pour ladite seconde fonction et jusqu'à des valeurs inférieures pour ladite première fonction.

4. Procédé selon l'une quelconque des revendications précédentes, dans lequel ladite zone de manoeuvre comprend des valeurs allant de 0 jusqu'à des valeurs non supérieures à 30 %, facultativement non supérieures à 25 % du déplacement de la pédale d'accélérateur pour ladite première fonction.

5. Programme approprié, lorsqu'il est exploité sur un ordinateur, pour mettre en oeuvre le procédé selon la revendication 1 ou 2.

6. Programme selon la revendication 5, dans lequel ladite zone de manoeuvre comprend des valeurs allant de 0 et jusqu'à 60 % du déplacement de la pédale d'accélérateur pour ladite seconde fonction et jusqu'à des valeurs inférieures pour ladite première fonction.

7. Programme selon l'une quelconque des revendications 5 ou 6, dans lequel ladite zone de manoeuvre comprend des valeurs de 0 jusqu'à des valeurs non supérieures à 30 %, facultativement non supérieures à 25 % du déplacement de la pédale d'accélérateur pour ladite première fonction.
